# EUROPÄISCHE PATENTANMELDUNG

(11) **EP 2 416 084 A2**
(43) Veröffentlichungstag der Anmeldung: **08.02.2012**
(21) Anmeldenummer: 11163498.6
(22) Anmeldetag: 21.04.2011

(54) **Lagerungssystem für Solarmodule und Solaranlage**

(30) Priorität: 17.05.2010 DE 102010029003
(71) Anmelder: HILTI Aktiengesellschaft, 9494 Schaan (LI)
(72) Erfinder: Bragagna, Elio, 6822 Duens (AT)

(57) **Zusammenfassung**

Ein Lagerungssystem für Solarmodule, weist einen Montagefuß (10), einen Gleitschuh (54), der aus einem Material mit einem hohen Reibungskoeffizienten besteht, und eine Gleiteinlage (64) auf, die entfernbar zwischen dem Montagefuß (10) und dem Gleitschuh (54) angeordnet ist.

## Beschreibung

Die Erfindung betrifft ein Lagerungssystem für Solarmodule mit einem Standfuß sowie einer Solaranlage mit mehreren Montagefüßen.

Solaranlagen erfreuen sich derzeit angesichts steigender Energiekosten, zahlreicher Förderprogramme für regenerative Energien und aktueller Diskussionen über die Folgen eines globalen Klimawandels sowohl aus ökonomischen als auch ökologischen Gründen wachsender Beliebtheit. Eigentümer von für Solaranlagen geeigneten Immobilien sind dabei stets bestrebt, den maximalen Energieertrag bei möglichst geringen Investitionen in die Solaranlage sowie einen solargerechten Umbau des Gebäudes zu erzielen.

Es hat sich gezeigt, dass Flachdächer für eine Nutzung durch Solaranlagen besonders geeignet sind, da in der Regel keine oder lediglich minimale bauliche Anpassungen am Gebäude selbst notwendig sind. Üblicherweise wird als Unterkonstruktion lediglich ein Montagesystem aufgestellt, um die Solarmodule schräg zu stellen und auf der Nordhalbkugel nach Süden hin auszurichten, wodurch der Wikungsgrad und damit die Energieausbeute der Solaranlage deutlich ansteigen.

Um Schäden an der Dachhaut und der bei Flachdächern empfindlichen Dachabdichtung zu vermeiden, wird dieses Montagesystem üblicherweise installiert, ohne eine direkte Befestigung oder Verbindung zum Gebäude herzustellen. Die Sicherung des Montagesystems gegen Verschieben oder Abheben erfolgt über Ballast, wobei jedoch die maximale Traglast des Flachdachs zu beachten ist. Das als Unterkonstruktion dienende Montagesystem bildet somit einen Dachaufbau, an dem die Solarmodule unter einem gewünschten Neigungswinkel befestigt werden.

Durch starke Temperaturschwankungen kann es Längenänderungen des Montagesystems kommen, die aufgrund der großen Abmessungen der Solaranlage zu großen Verschiebungen der Montagefüße führen können. Ein Verschieben bzw. Reiben der Montagefüße auf der Dachhaut kann aber zu einer Beschädigung der Dachhaut und zu Undichtigkeiten des Daches führen.

Aufgabe der Erfindung ist es, ein Lagerungssystem für Solarmodule bereitzustellen, das auch bei temperaturbedingten Lageveränderungen der Montagefüße eine Aufstellung eines Solarmoduls auf einer Dachhaut ohne Schädigung der Dachhaut ermöglicht.

Erfindungsgemäß wird diese Aufgabe gelöst durch ein Lagerungssystem für Solarmodule, mit einem Montagefuß, einem Gleitschuh, der aus einem Material mit einem hohen Reibungskoeffizienten besteht, und einer Gleiteinlage, die entfernbar zwischen dem Montagefuß und dem Gleitschuh angeordnet ist. Der Erfindung liegt die Überlegung zugrunde, die Verschiebung der Montagefüße, die auf temperaturbedingte Längenänderungen zurückgeht, von der Dachhaut weg zwischen einen Gleitschuh und den Montagefuß zu verlagern. Der Reibungskoeffizient zwischen Gleitschuh und Dachhaut ist größer als der Reibungskoeffizient zwischen Montagefuß und Gleiteinlage bzw. zwischen Gleiteinlage und Gleitschuh. Bei einer Verschiebung des Montagefußes zur Dachhaut wird so der Montagefuß auf der Gleiteinlage bzw. die Gleiteinlage im Gleitschuh verschoben. Der Gleitschuh bleibt aufgrund seines hohen Reibungskoeffizienten lagefest auf der Dachhaut, sodass eine reibende Bewegung, die zu einer Beschädigung der Dachhaut führen könnte, ausgeschlossen ist.

Um einen möglichst hohen Reibungskoeffizienten zu bieten, besteht der Gleitschuh vorzugsweise aus Gummi. Der Gleitschuh kann aber auch lediglich eine Unterseite aus Gummi aufweisen, die auf der Dachhaut aufliegt.

Die Gleiteinlage kann beispielsweise aus einem beliebigen Kunststoffmaterial bestehen, das einen geringen Reibungskoeffizienten bietet.

Vorzugsweise ist die Gleiteinlage aus demselben Material hergestellt wie der Montagefuß.

Bei wiederholten Verschiebungen, beispielsweise hervorgerufen durch Temperaturunterschiede bei Tag- und Nachtwechsel, kann es zu einem Verschieben der Solaranlage bzw. der Montagefüße zu den Gleitschuhen kommen, wodurch die Montagefüße von den Gleitschuhen abrutschen könnten. Um dies zu verhindern, weist der Gleitschuh einen erhöhten Rand auf, sodass eine Gleitfläche definiert ist, auf der der Montagefuß aufliegt. Durch den erhöhten Rand kann der Montagefuß nicht von der Gleitfläche bzw. dem Gleitschuh abrutschen. Die Gleitfläche ist dabei vorzugsweise größer als der Montagefuß, sodass dieser eine ausreichende Bewegungsfreiheit hat, um Verschiebungen aufgrund von Ausdehnungen und Schrumpfungen auszugleichen.

Um bei Niederschlag stehendes Wasser auf der Gleitfläche bzw. der Gleiteinlage zu verhindern, wodurch es beispielsweise bei Frost zu einer Schädigung der Gleitfläche bzw. der Gleiteinlage kommen könnte, weist der erhöhte Rand Wasserablauföffnungen auf, durch die Wasser von der Gleitfläche abfließen kann.

Um den Wasserablauf von der Gleitfläche bzw. der Oberfläche des Gleitschuhs zu verbessern, können an der Oberseite des Gleitschuhs, also auf der Gleitfläche, auch Wasserablaufrinnen vorgesehen sein.

Alternativ zu einem erhöhten Rand sind auch weitere Ausgestaltungsformen denkbar, die ein Abgleiten des Montagefußes von dem Gleitschuh verhindern. Insbesondere kann dies durch einen Höhensprung (z. B. Nut) an einer der beiden Komponenten bewerkstelligt werden, der sein Gegenstück auf der jeweils anderen Komponente erfährt. Bei einem Überfahren des Höhensprunges würde dieser dann von seinem Gegenstück gehalten werden.

Erfindungsgemäß ist des Weiteren eine Solaranlage mit mehreren Montagefüßen und jeweils einem Gleitschuh pro Montagefuß vorgesehen, wobei die Gleitschuhe zwischen den Montagefüßen und dem Untergrund angeordnet sind, auf dem die Solaranlage errichtet ist. Zwischen einem der Montagefüße und dem Gleitschuh ist die Gleiteinlage entfernt, wodurch dieser Gleitschuh als Referenzpunkt dient, und die anderen Montagefüße durch Verschieben auf den Gleiteinlagen wärmebedingte Dehnungen der Solaranlage ausgleichen können. Bei wiederholten Wärmedehnungen können die Montagefüße auf den Gleitschuhen 'wandern', wodurch bei häufigen Temperaturunterschieden ein Verschieben der gesamten Solaranlage auf dem Untergrund möglich wäre. Um dies zu verhindern, wird bei einem Gleitschuh die Gleiteinlage entfernt, sodass dieser Montagefuß einen erhöhten Reibungskoeffizienten gegenüber den anderen Montagefüßen aufweist. Bei einer Längenänderung durch Temperaturunterschiede bleibt dieser Montagefuß aufgrund des hohen Reibungskoeffizienten lagefest, wirkt also als Festlager, während sich die anderen Montagefüße von diesem weg bzw. auf diesen zu bewegen können. Ein Verschieben der gesamten Solaranlage auf dem Dach bzw. auf dem Untergrund ist so sicher ausgeschlossen.

Vorzugsweise handelt es sich bei dem Montagefuß, unter dem die Gleiteinlage entfernt ist, um einen mittig angeordneten Montagefuß, sodass die Verschiebung der übrigen Montagefüße aufgrund von Wärmedehnungen gleichmäßig zu allen Seiten des mittig angeordneten Montagefußes erfolgt. Die maximale Verschiebung eines Montagefußes, in diesem Fall die der äußeren Montagefüße, die am weitesten von dem als Referenzpunkt verwendeten Montagefuß entfernt sind, kann so möglichst gering gehalten werden.

Weitere Vorteile und Merkmale ergeben sich aus der nachfolgenden Beschreibung in Verbindung mit den beigefügten Zeichnungen. In diesen zeigen:
- Figur 1 eine perspektivische Ansicht eines Montagefußes für Solarmodule;
- Figur 2 eine perspektivische Ansicht einer erfindungsgemäßen Solaranlage;
- Figur 3 einen Ausschnitt aus einem Montagesystem für Solarmodule in perspektivischer Ansicht;
- Figur 4 eine Detailansicht eines Gleitschuh eines erfindungsgemäßen Lagerungssystems;
- Figur 5 eine Detailansicht eines erfindungsgemäßen Lagerungssystems; und
- Figur 6 eine Detailansicht der erfindungsgemäßen Solaranlage.

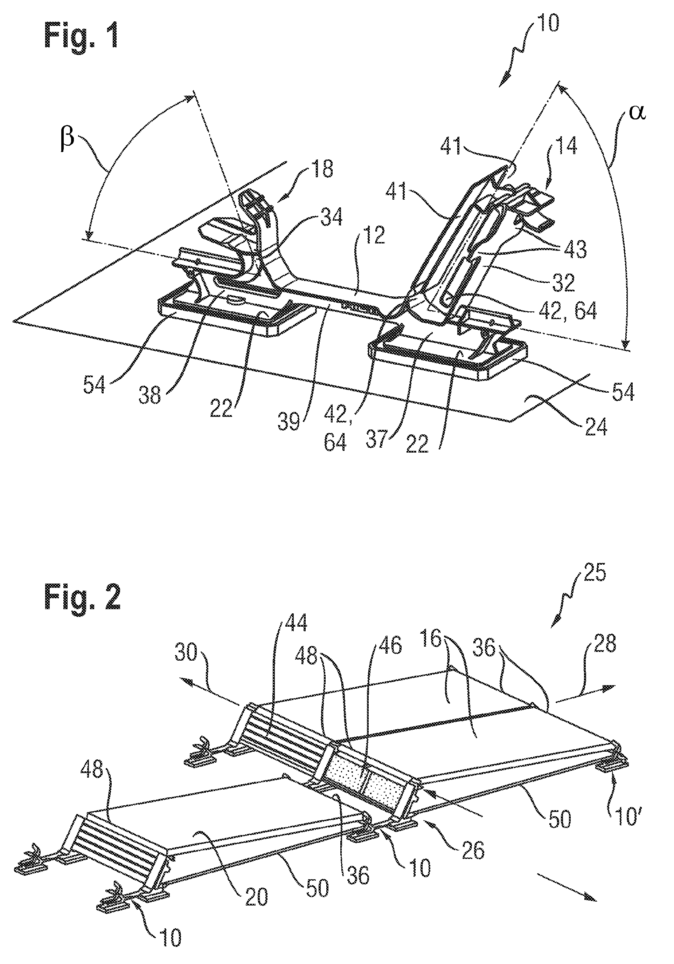

Die Figur 1 zeigt einen Montagefuß 10 für Solarmodule, mit einem Grundkörper 12, einem mit dem Grundkörper 12 verbundenen oberen Auflager 14 für eine erste schräggestellte Modulplatte 16 und einem mit dem Grundkörper 12 verbundenen unteren Auflager 18 für eine zur ersten Modulplatte 16 nichtkoplanare, benachbarte, zweite schräggestellte Modulplatte 20. Der Grundkörper 12 hat wenigstens eine Standfläche 22, mit welcher sich der Montagefuß 10 an einem Untergrund 24, wie z.B. einer Dachhaut eines Flachdachs, abstützen kann. Das obere Auflager 14 weist dabei einen größeren Abstand zu einer von der Standfläche 22 aufgespannten Ebene auf als das untere Auflager 18.

Um die Funktion und Verwendung eines solchen Montagefußes 10 sowie den Unterschied zwischen ersten und zweiten Modulplatten 16, 20 zu verdeutlichen, ist in Figur 2 ein Ausschnitt einer Solaranlage 25 mit einem Montagesystem 26 für Solarmodule dargestellt, wobei das vorliegende Montagesystem 26 ein Flachdach-Montagesystem mit entsprechend horizontalem Untergrund 24 ist und mehrere Montagefüße 10 gemäß Figur 1 aufweist. Das Montagesystem 26 bildet zusammen mit den als Modulplatten 16, 20 ausgebildeten Solarmodulen die Solaranlage 25. Außer auf Flachdächern ist eine Verwendung des Montagesystems 26 auch auf Pultdächern mit geringer Dachneigung oder einem anderen Untergrund 24 mit geringer Neigung denkbar.

Das Montagesystem 26 umfasst mehrere relativ zu einer von der Standfläche 22 aufgespannten Ebene geneigte oder schräggestellte Solarmodule, welche gemäß Figur 2 in zwei Solarmodulreihen mit ersten Modulplatten 16 und zweiten Modulplatten 20 aufgeteilt sind, wobei in Figur 2 ist nur eine zweite Modulplatte 20 gezeigt ist. Als Solarmodulreihe werden dabei alle Modulplatten 16, 20 bezeichnet, welche koplanar, das heißt in einer Ebene liegend, angeordnet sind. Die Modulplatten 16, 20 zweier unterschiedlicher Solarmodulreihen sind hingegen nicht-koplanar angeordnet und liegen entsprechend in unterschiedlichen, wenn auch zumeist im Wesentlichen parallelen Ebenen.

Die Schrägstellung bzw. Neigung der Solarmodule ist in der Regel so ausgerichtet, dass eine Oberseite der Solarmodule, jedenfalls auf der Nordhalbkugel, nach Süden gewandt ist. Im Folgenden wird eine Neigungsrichtung der Solarmodule als Längsrichtung 28 des Montagesystems 26 definiert, sodass die Längsrichtung 28 bei einer fertiggestellten Solaranlage 25 gemäß Figur 2 üblicherweise der Nord-Süd-Richtung entspricht. Dementsprechend erstreckt sich eine Solarmodulreihe in einer Querrichtung 30, welche üblicherweise der West-Ost-Richtung entspricht.

Mit Bezug auf den Montagefuß 10 gemäß Figur 1 ist sowohl das obere Auflager 14 als auch das untere Auflager 18 am freien Ende eines vom Grundkörper 12 nach oben ragenden Schenkels 32, 34 angeordnet.

Im vorliegenden Ausführungsbeispiel ist das freie Ende des Schenkels 34 mit dem unteren Auflager 18 als Gabellager zur Aufnahme eines (von Süden gesehen) vorderen Rands 36 der Modulplatte 16, 20 ausgebildet (vgl. auch Figur 2). Das Gabellager ist dabei so ausgeführt, dass es ein begrenztes Verschwenken der Modulplatte 16, 20 um das untere Auflager 18 zulässt, sodass der Montagefuß 10 in baugleicher Ausführung für unterschiedliche Neigungswinkel der Solarmodule verwendet werden kann.

Gemäß Figur 1 schließen beide Schenkel 32, 34 für die Auflager 14, 18 jeweils einen spitzen Winkel α, β mit der Standfläche 22 ein, wobei die Schenkel 32, 34 in Längsrichtung 28 jeweils voneinander weg gerichtet sind.

Insbesondere der Schenkel 32 des oberen Auflagers 14 ist vom Schenkel 34 weg gerichtet und schließt einen spitzen (Anstell-)Winkel α, das heißt einen Winkel von 0° < α < 90° mit der Standfläche 22 ein. Aufgrund des bei einer Windbelastung auftretenden Staudrucks liegt der Anstellwinkel α des Schenkels 32 vorzugsweise zwischen 50° und 80°. Anstellwinkel α ≥ 90° sind prinzipiell denkbar, aus dem oben genannten Grund allerdings nur in besonderen Ausnahmefällen sinnvoll.

Der Schenkel 34 des unteren Auflagers 18 ist in der Regel so kurz, dass sein Anstellwinkel β keinen nennenswerten Einfluss auf das Montagesystem 26 hat. Daher kann der in Figur 1 eingezeichnete Anstellwinkel β des Schenkels 34 auch Werte von β ≥ 90° annehmen.

Der Grundkörper 12 des Montagefußes 10 gemäß Figur 1 umfasst einen ersten Grundkörperabschnitt 37 mit einem das obere Auflager 14 aufweisenden Schenkel 32, einen zweiten Grundkörperabschnitt 38 mit einem das untere Auflager 18 aufweisenden Schenkel 34 und einen Verbindungssteg 39 zwischen den Grundkörperabschnitten 37, 38, wobei die Standfläche 22 im Bereich des Verbindungsstegs 39 unterbrochen ist. Mit anderen Worten gibt es zwei Standflächen 22, welche in vorteilhafter Weise unmittelbar an den Lasteinleitungsstellen der Schenkel 32, 34 des Montagefußes 10 angeordnet sind, sodass eine sichere Lastabstützung in den Untergrund 24 gewährleistet ist. Gegenüber einer einzigen, großen Standfläche 22 bietet diese Ausführungsform bei lokal sehr unebenem Untergrund 24 den Vorteil einer größeren Standsicherheit infolge geringerer Kippneigung.

Außerdem ermöglicht die unterbrochene Standfläche 22 eine Verlegung von Leitungen und Kabeln in Querrichtung 30 unmittelbar auf dem Untergrund 24, unterhalb des Verbindungsstegs 39. Durch wird die Gefahr einer Beschädigung der Leitungen oder Kabel minimiert.

Gemäß Figur 1 sind am Schenkel 32 des oberen Auflagers 14 Lagerabschnitte 41, 42, 43 für ein Windschott 44 und ein Ballastelement 46 (vgl. Figur 2) zu sehen. Der Lagerabschnitt 41 für das Windschott 44 ist dabei eine Nut, welche sich in Längsrichtung des Schenkels 32 erstreckt und seitliche Enden des Windschotts 44 aufnehmen kann. Ein Anstellwinkel des Windschotts 44 entspricht somit dem Anstellwinkel α des Schenkels 32 mit dem oberen Auflager 14. Die Lagerabschnitte 42, 43 für das Ballastelement 46 sind als Abstützfläche im Übergangsbereich zwischen dem Grundkörper 12 und dem Schenkel 32 bzw. als seitlich vorstehende Lagerzunge am Schenkel 32 ausgebildet. Die Lagerabschnitte 42, 43 sind dabei so angeordnet, dass ein Anstellwinkel der plattenförmigen Ballastelemente 46 im wesentlichen dem Anstellwinkel α des Schenkels 32 mit dem oberen Auflager 14 entspricht.

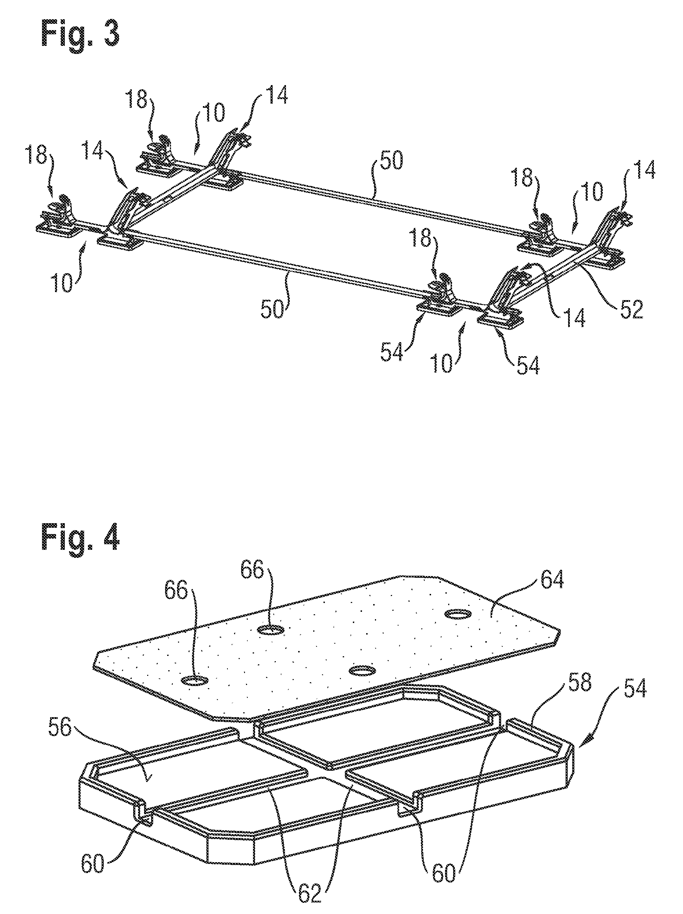

Das Montagesystem 26 weist in Figur 2 mehrere in Längsrichtung 28 hintereinander angeordneten Montagefüße 10 auf, um den vorderen Rand 36 einer Modulplatte 16, 20 am unteren Auflager 18 eines vorderen Montagefußes 10 und einen hinteren Rand 48 dieser Modulplatte 16, 20 am oberen Auflager 14 eines hinteren Montagefußes 10 zu lagern. Darüber hinaus umfasst das Montagesystem 26 Längsverbindungsstreben 50 zum Verbinden von zwei in Längsrichtung 28 benachbarten Montagefüßen 10 sowie Querverbindungsstreben 52 zum Verbinden von zwei in Querrichtung 30 benachbarten Montagefüßen 10. Dieser prinzipielle Systemaufbau lässt sich insbesondere auch der Figur 3 entnehmen, in der ein Ausschnitt des Montagesystems 26 dargestellt ist. Die Längsverbindungsstreben 50 sind vorzugsweise aus Aluminium hergestellt, können alternativ aber auch aus Metall oder Kunststoff hergestellt sein. Die Querverbindungsstreben 52 sind bevorzugt Metallstreben, insbesondere dann, wenn sie als Auflager für die Ballastelemente 46 dienen. Alternativ sind aber natürlich auch Querverbindungsstreben 52 aus Kunststoff denkbar.

Da das Montagesystem 26 starken Temperaturschwankungen unterliegt und sowohl in Längsrichtung 28 als auch in Querrichtung 30 gewöhnlich Abmessungen von mehreren Metern erreicht, sind die auftretenden Längenänderungen durch Temperaturänderung beachtlich.

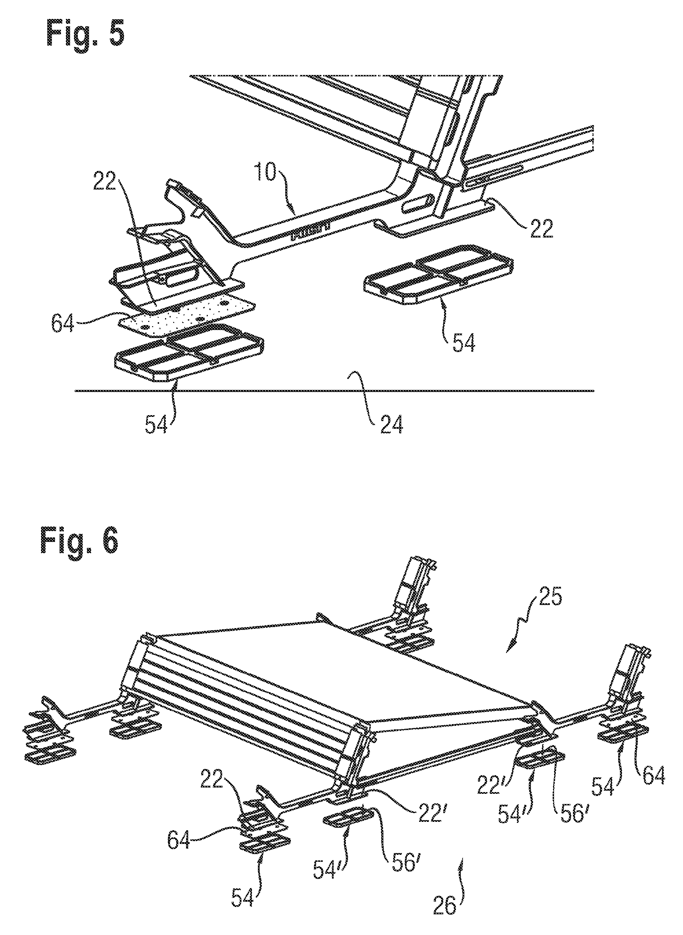

Um eine Beschädigung der Dachhaut durch die sich verschiebenden Montagefüße 10 zu verhindern, ist zwischen den Montagefüßen 10 und dem Untergrund 24 jeweils ein Gleitschuh 54 vorgesehen, der in Figur 4 dargestellt ist. Auf die Gleitfläche 56 kann eine Gleiteinlage 64 aufgelegt werden, die zwischen einer Gleitfläche 56 des Gleitschuhs 54 und der Standfläche 22 des Montagefußes 10 liegt (Figur 5).

Der Gleitschuh 54 hat hier eine im wesentlichen rechteckige Form, mit einer der Standfläche 22 des Montagefußes zugewandten Gleitfläche 56. Die Gleitfläche 56 ist größer als die Standfläche 22 des Montagefußes 10, wobei die Gleitfläche 56 so groß gewählt ist, dass die Standfläche 22 auch bei der maximal möglichen temperaturbedingten Verschiebung vollständig auf der Gleitfläche 56 aufliegt.

Der Gleitschuh 54 hat des weiteren einen umlaufenden erhöhten Rand 58, der bei wiederholten Verschiebungen ein Abgleiten der Standfläche 22 oder der Gleiteinlage 64 von der Gleitfläche 56 verhindert. Der Rand ist von mehreren Wasserablauföffnungen 60 unterbrochen, durch die Regenwasser von der Gleitfläche 56 abfließen kann. Auf der Oberseite des Gleitschuhs 54 sind mehrere Wasserablaufrinnen 62 vorgesehen, die zu den Wasserablauföffnungen 60 führen. Auf der Gleiteinlage 64 sind mehrere Aussparungen 66 vorgesehen, die ein Ablaufen von Wasser zu den Wasserablaufrinnen 62 ermöglichen. Die Gleiteinlage 64 ist vorzugsweise aus Kunststoff gefertigt.

Der Gleitschuh 54 besteht aus Gummi oder einem anderen Material mit einem hohen Reibungskoeffizienten, so dass eine Verschiebung des Gleitschuhs 54 auf dem Untergrund 24 nur mit großem Kraftaufwand möglich ist. Der Reibungskoeffizient zwischen Gleiteinlage 64 und Standfläche 22 ist wesentlich geringer, sodass der Montagefuß 10 bzw. die Standfläche 22 des Montagefußes 10 auf der Gleiteinlage 64 mit einem geringeren Widerstand verschiebbar ist als der Gleitschuh 54 auf dem Untergrund 24. Bei einer temperaturbedingten Ausdehnung der Solaranlage werden die Montagefüße 10 auf den Gleitschuhen 54 verschoben, während die Gleitschuhe 54 aufgrund des hohen Reibungskoeffizienten nicht auf dem Untergrund 24 verschoben werden. Die Verschiebung ist also von der Dachhaut weg zwischen Gleiteinlage 64 und Standfläche 22 verlagert, sodass die Dachhaut sicher vor Beschädigungen durch reibende Montagefüße 10 geschützt ist.

Um die maximale Verschiebung eines Montagefußes möglich gering zu halten, ist vorzugsweise bei einem in Längsrichtung 28 und/oder in Querrichtung 30 mittig angeordneten Gleitschuh 54 die Gleiteinlage 64 entfernt. Eine solche Solaranlage ist in Figur 6 dargestellt, wobei hier an zwei Standflächen 22' die Gleiteinlagen zwischen den Standflächen 22' und den Gleitschuhen 54' entfernt sind. Die Gleiteinlagen sind hier, lediglich zur Darstellung des Funktionsprinzips, an zwei benachbarten Montagefüßen 10 an jeweils einer Standfläche 22' entfernt, vorzugsweise werden die Gleiteinlagen 64 aber nur bei einem Montagefuß 10 entfernt. Die Standflächen 22' liegen hier also direkt auf den Gleitflächen 56' der Gleitschuhe 54' auf, so dass diese einen hohen Reibungswiderstand haben und somit gewissermaßen als Festlager ausgebildet sind. An den äußeren Standflächen 22 ist die Gleiteinlage 64 nicht entfernt, so dass diese jeweils ein Gleitlager bilden.

Bei einer Temperaturausdehnung bleiben somit die inneren Montagefüße 10 aufgrund des hohen Reibungskoeffizienten lagefest, während die äußeren Montagefüße 10 gleichmäßig von der Mitte nach außen verschoben werden. Die Solaranlage 25 bzw. das Montagesystem 26 dehnt sich somit gleichmäßig von der Mitte in alle Richtungen aus. Da die Ausdehnung bzw. die Verschiebung gleichmäßig zu allen Seiten erfolgt, wird die maximale Verschiebung einer Standfläche 22 auf einem Gleitschuh 54, hier die Standfläche 22, die den größten Abstand zu einer als Festlager ausgebildeten Standfläche 22' aufweist, möglich gering gehalten. Zudem wird ein 'Wandern' des gesamten Montagesystems 26 auf dem Untergrund 24 beispielsweise durch wiederholtes Ausdehnen und Schrumpfen zuverlässig verhindert.

## Patentansprüche

1. Lagerungssystem für Solarmodule, mit einem Montagefuß (10), einem Gleitschuh (54), der aus einem Material mit einem hohen Reibungskoeffizienten besteht, und einer Gleiteinlage (64), die entfernbar zwischen dem Montagefuß (10) und dem Gleitschuh (54) angeordnet ist.

2. Lagerungssystem nach Anspruch 1, **dadurch gekennzeichnet, dass** der Gleitschuh (54) aus Gummi besteht.

3. Lagerungssystem nach Anspruch 1 oder 2, **dadurch gekennzeichnet, dass** die Gleiteinlage (64) aus einem Kunststoffmaterial besteht.

4. Lagerungssystem nach einem der vorhergehenden Ansprüche, **dadurch gekennzeichnet, dass** die Gleiteinlage (64) aus demselben Material besteht wie der Montagefuß (10).

5. Lagerungssystem nach einem der vorhergehenden Ansprüche, **dadurch gekennzeichnet, dass** der Gleitschuh (54) einem erhöhten Rand (58) aufweist, so dass eine Gleitfläche (56) definiert ist, wobei die Gleitfläche (56) größer ist als der Montagefuß (10).

6. Lagerungssystem nach Anspruch 5, **dadurch gekennzeichnet, dass** der erhöhte Rand (58) Wasserablauföffnungen (60) aufweist.

7. Lagerungssystem nach einem der vorhergehenden Ansprüche, **dadurch gekennzeichnet, dass** auf der Oberseite des Gleitschuhs (54) Wasserablaufrinnen (62) vorgesehen sind.

8. Solaranlage (25) mit mehreren Montagefüßen (10) und jeweils einem Gleitschuh (54) pro Montagefuß (10), wobei die Gleitschuhe (54) zwischen den Montagefüßen (10) und dem Untergrund (24) angeordnet sind, auf dem die Solaranlage (25) errichtet ist, und wobei zwischen einem der Montagefüße (10) und dem Gleitschuh (54) die Gleiteinlage (64) entfernt ist, wodurch dieser Gleitschuh (54) als Referenzpunkt dient, und die anderen Montagefüße (10) durch Verschieben auf den Gleiteinlagen (64) Wärmedehnungen der Solaranlage (25) ausgleichen können.

9. Solaranlage nach Anspruch 8, **dadurch gekennzeichnet, dass** es sich bei dem Montagefuß (10), unter dem die Gleiteinlage (64) entfernt ist, um einen mittig angeordneten Montagefuß (10) handelt, so dass die Verschiebung der übrigen Montagefüße (10) aufgrund von Wärmedehnungen gleichmäßig zu allen Seiten des mittig angeordneten Montagefußes (10) erfolgt.
